# FASCICULE DE BREVET EUROPEEN

(11) **EP 2 156 088 B1**
(45) Date de publication et mention de la délivrance du brevet: **16.05.2012**
(21) Numéro de dépôt: 08805670.0
(22) Date de dépôt: 21.04.2008
(51) Int. Cl.: F16L 21/06, F16L 33/02, F16B 2/08, F16L 33/04, F16L 23/08, F16L 23/04

(54) **DISPOSITIF DE SERRAGE**
SPANNVORRICHTUNG
CLAMPING DEVICE

(30) Priorité: 24.04.2007 FR 0754669
(43) Date de publication de la demande: 24.02.2010
(73) Titulaire: Etablissements Caillau, 92130 Issy-les-Moulineaux (FR)
(72) Inventeur: BOUCHIAT, Jérome, F-41320 Langon (FR); RIGOLLET, Nicolas, F-41200 Romorantin (FR); MOTTEAU, Gérard, F-36210 Chabris (FR)
(74) Mandataire: Besnard, Christophe Laurent
(86) Numéro de dépôt international: PCT/FR2008/050708
(87) Numéro de publication internationale: WO 2008/145919

(56) Documents cités:
- EP-A- 0 367 169
- WO-A1-2006/109001
- GB-A- 2 094 385
- US-A- 848 139

## Description

La présente invention concerne un dispositif de serrage du type comprenant :
- un collier comprenant une ceinture susceptible d'être disposée autour d'objet(s) à serrer et au moins deux oreilles redressées par rapport à cette ceinture, vers l'extérieur de celle-ci, et
- un système de serrage apte à coopérer avec les deux oreilles pour rapprocher celles-ci l'une de l'autre de manière à provoquer le serrage du collier,
dans lequel au moins une des deux oreilles présente une portion de raccordement à la ceinture, redressée par rapport à cette ceinture, et une paroi de serrage repliée vers la ceinture, le système de serrage venant en prise avec cette paroi de serrage lors du serrage du collier.

L'intérieur et l'extérieur de la ceinture sont définis de sorte que l'intérieur de la ceinture est l'espace qui reçoit l'objet à serrer.

Des dispositifs de ce type sont utilisés, par exemple, pour le serrage de deux tubes disposés bout à bout.

Ledit système de serrage est le plus souvent un ensemble vis/écrou.

Par ailleurs, la ceinture a le plus souvent une forme générale annulaire centrée sur un axe noté "A" et le serrage du collier se fait par diminution du diamètre de la ceinture. Aussi, dans la présente demande, la direction axiale correspond à la direction de l'axe A, et une direction radiale est une direction perpendiculaire à l'axe A. La direction circonférentielle est définie en rapport avec la circonférence de la ceinture.

Le brevet US 848,139, la demande PCT WO 2006/109001A1 et la demande de brevet EP 0 367 169 A1 décrivent des exemples connus de dispositifs de serrage du type précité.

Ces dispositifs connus comprennent une ceinture de collier de forme générale annulaire et un ensemble vis/écrou comme système de serrage. La paroi de serrage et la portion de raccordement des oreilles du collier présentent des ouvertures traversées par la tige de la vis. Il existe un jeu de montage entre ces ouvertures et la tige de la vis. Lors du serrage, la tête de la vis et l'écrou viennent respectivement en appui sur les parois de serrage de deux oreilles en vis-à-vis, de manière à rapprocher ces oreilles l'une de l'autre et à provoquer le serrage du collier, par diminution du diamètre de la ceinture.

Même si le collier de US 848,139 apporte globalement satisfaction, on s'est rendu compte que, pour certaines applications exigeantes, chaque oreille se déforme (elle se "déplie") sous l'effet des efforts de serrage (l'amplitude de cette déformation dépendant du jeu de montage précité) au niveau la zone charnière entre la portion de raccordement et la ceinture du collier. Les oreilles en vis-à-vis basculent alors l'une vers l'autre, ce qui diminue l'efficacité du serrage du collier.

Ce problème de basculement des oreilles est évité avec le collier de EP 0 367 169 A1 car les parois de serrage des oreilles sont soudées sur la ceinture du collier. Cependant, le soudage des parois de serrage sur la ceinture constitue une étape supplémentaire et coûteuse lors de la fabrication du collier. En outre, la liaison par soudage est, par nature, une liaison totalement rigide qui prive la paroi de serrage de toute liberté de mouvement. Or, la paroi de serrage constitue la zone d'appui de la tête de vis ou de l'écrou, de sorte qu'on préfère généralement que cette paroi conserve une faible liberté de mouvement pour que l'appui de la tête de vis ou de l'écrou sur cette paroi soit optimal (cette liberté doit bien entendu rester limitée pour ne pas diminuer l'efficacité de serrage du collier).

La présente invention a pour but d'améliorer l'état de la technique présenté ci-dessus.

Pour atteindre ce but, l'invention a pour objet un dispositif de serrage tel que défini dans la revendication 1, dans lequel la ceinture présente sur sa face extérieure au moins une partie saillante située entre la portion de raccordement et la paroi de serrage, la paroi de serrage venant en butée contre cette partie saillante lors du serrage du collier.

Grâce à cette configuration, la partie saillante portée par la ceinture retient l'oreille et empêche son basculement.

En outre, la paroi de serrage conserve une certaine liberté de mouvement (tant qu'elle n'est pas en butée contre la partie saillante) ce qui permet d'assurer un bon positionnement relatif, et donc un bon appui, entre cette paroi et les éléments du système de serrage utilisé.

On notera que les efforts de serrage s'appliquent directement sur la paroi de serrage, c'est-à-dire à distance de la portion de raccordement.

Concernant le système de serrage, il s'agit le plus souvent d'un ensemble vis/écrou, mais il pourrait également s'agir d'une tige filetée et de deux écrous.

On notera également que le collier de l'invention peut comprendre une ou plusieurs oreilles "spéciales" avec portion de raccordement, paroi de serrage et partie saillante sur la ceinture du collier. Notamment, lorsque le collier comprend deux oreilles au total, il peut comprendre une ou deux oreilles "spéciales" et, lorsque le collier comprend quatre oreilles au total, il peut comprendre deux ou quatre oreilles "spéciales".

Selon un mode de réalisation, ladite partie saillante est formée par une languette découpée dans la ceinture et redressée vers l'extérieur de cette ceinture. Cette languette fait donc saillie par rapport à la face extérieure de la ceinture. Cette languette se termine par une extrémité libre. Selon un premier exemple, l'extrémité libre est orientée vers la paroi de serrage. Dans ce cas, la paroi de serrage peut venir en butée contre cette extrémité libre lors du serrage du collier. Selon un deuxième exemple, cette extrémité libre est orientée vers la une face latérale du collier et la paroi de serrage peut venir en butée contre un flanc de la languette lors du serrage du collier. On notera que si les efforts de serrage appliqués sur la paroi de serrage sont importants, on préfère une languette orientée selon le deuxième exemple car elle risque de moins se déformer (en particulier elle ne risque pas de se "retourner") sous l'effet des efforts de serrage.

Selon un mode de réalisation, ladite partie saillante est formée par un bossage réalisé par déformation de la ceinture, vers l'extérieur. Ce bossage fait donc saillie sur la face extérieure de la ceinture et la paroi de serrage vient en butée contre ce bossage lors du serrage du collier. Avantageusement, pour éviter que la paroi de serrage puisse passer au dessus du bossage en cas de serrage fort et, plus généralement, pour améliorer l'appui de la paroi de serrage sur le bossage, le bossage est fendu de manière à présenter au moins un bord franc contre lequel la paroi de serrage vient en butée. Ce bord franc forme une nervure d'appui pour la paroi de serrage.

Selon un mode de réalisation, ladite partie saillante (qu'il s'agisse d'une languette ou d'un bossage) forme une entretoise entre la paroi de serrage et la portion de raccordement. En d'autres termes, lors du serrage, la paroi de serrage et la portion de raccordement viennent en butée de chaque côté de la partie saillante, de sorte qu'à partir de ce moment, l'écartement entre la paroi de serrage et la portion de raccordement est maintenu constant.

Selon un mode de réalisation la paroi de serrage porte un ergot et ladite partie saillante définit sous elle un logement destiné à recevoir ledit ergot. Cette coopération entre l'ergot et la partie saillante peut permettre de limiter les possibilités de déplacement radial de la paroi de serrage et/ou de centrer la paroi de serrage vis-à-vis de la ceinture.

Selon un autre mode de réalisation, à la place dudit ergot, la paroi de serrage présente une fente dans laquelle la partie saillante sous forme de languette peut s'engager lors du serrage. La portion de paroi de serrage située sous ladite fente vient alors se loger sous la languette et vient en butée contre cette languette lors du serrage.

Selon un mode de réalisation, pour permettre de centrer la paroi de serrage vis-à-vis de la ceinture, la paroi de serrage porte deux pattes latérales s'étendant de part et d'autre de la ceinture. Le déplacement axial de la paroi de serrage est ainsi limité par ces pattes qui sont en butée contre les bords latéraux de la ceinture ou y viennent rapidement en cas de décentrage.

Selon un mode de réalisation, l'oreille présentant la portion de raccordement et la paroi de serrage présente, en outre, une paroi de liaison entre la portion de raccordement et la paroi de serrage, le profil de l'oreille ayant la forme d'un U dont la base est formée par ladite paroi de liaison.

Afin d'éviter l'écrasement de la partie haute de cette oreille en U sous l'effet des efforts de serrage, selon un premier exemple, ladite paroi de liaison présente sur sa face intérieure au moins une autre partie saillante qui forme entretoise entre la portion de raccordement et la paroi de serrage. Cette autre partie saillante s'étend entre la portion de raccordement et la paroi de serrage et peut être formée par une languette découpée dans ladite paroi de liaison et dont l'extrémité libre est orientée vers une des faces latérales du collier, ou un bossage réalisé par déformation de ladite paroi de liaison, ou encore un rebord latéral de la paroi de liaison replié vers l'intérieur de l'oreille. Selon un deuxième exemple, la portion de raccordement, la paroi de serrage et la paroi de liaison présentent chacune des rebords latéraux repliés vers l'intérieur de ladite oreille, les rebords latéraux de la paroi de liaison formant entretoise entre les rebords latéraux de la portion de raccordement et de la paroi de serrage.

L'invention sera bien comprise et ses avantages apparaîtront mieux à la lecture de la description détaillée qui suit, d'exemples de réalisation de l'invention, représentés à titre illustratif et non limitatif. La description se réfère aux planches de dessins annexées sur lesquelles :
- la figure 1 est une vue latérale d'un exemple de dispositif de serrage selon l'invention;
- les figures 2 et 3 sont des vues de détail en perspective montrant une oreille du collier du dispositif de la figure 1 ;
- la figure 4 est une vue de détail en perspective, analogue à celle de la figure 2, montrant un autre exemple de collier;
- la figure 5 est une vue latérale, suivant la flèche V de la figure 4 ;
- la figure 6 est une vue en coupe axiale, dans le plan VI-VI de la figure 5 ;
- la figure 7 est une vue de détail en perspective, analogue à celle de la figure 2, montrant un autre exemple de collier ;
- la figure 8 est une vue latérale, suivant la flèche VIII de la figure 7 ;
- la figure 9 est une vue en coupe axiale, dans le plan IX-IX de la figure 8 ;

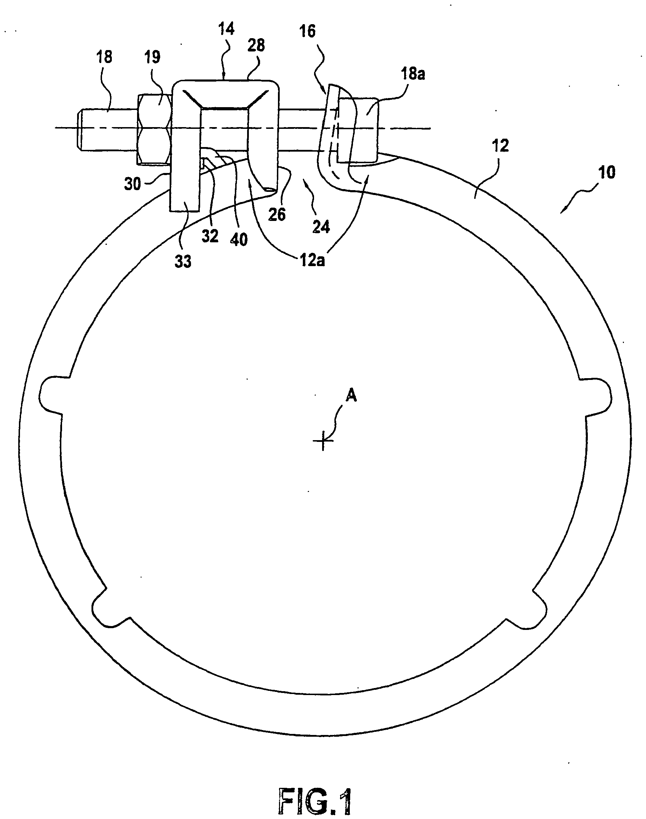

Le dispositif de serrage des figures 1 à 3 comprend :
- un collier 10 avec une ceinture 12 annulaire d'axe A et deux oreilles 14, 16 solidaires des extrémités 12A de la ceinture 12 et redressées par rapport à cette ceinture, vers l'extérieur de celle-ci, de sorte que les oreilles 14, 16 sont orientées plutôt radialement ; et
- un système de serrage apte à coopérer avec les deux oreilles 14, 16 pour rapprocher celles-ci l'une de l'autre de manière à provoquer le serrage du collier, par diminution du diamètre de la ceinture 12.

Dans l'exemple, le collier 10 est réalisé à partir d'une même bande métallique, par déformation de cette bande par pliage et/ou emboutissage.

Comme on le voit sur la figure 1, les oreilles 14, 16 sont disposées en regard l'une de l'autre et délimitent entre elles une fente 24. Le système de serrage représenté comprend une vis 18 et un écrou 19 coopérant avec la tige filetée de la vis. L'écrou 19 coopère avec l'une des oreilles 14, tandis que la tête 18a de la vis 18 coopère avec l'autre oreille 16. Eventuellement, la forme de l'oreille 16 est adaptée pour que la tête 18a de la vis soit bloquée en rotation lorsqu'elle est en appui contre l'oreille 16. On comprend que lors du serrage de l'ensemble vis/écrou, la largeur de la fente 24 va en diminuant.

Ce dispositif de serrage est utilisé pour raccorder de façon étanche deux tubes, par exemple des tubes d'échappement. La ceinture 12 du collier serre les tubes l'un contre l'autre. Pour cela, la ceinture 12 présente une périphérie intérieure biconique, dont la section est en V. Le premier tube à serrer présente, à son extrémité, un bicône avec deux portées tronconiques, tandis que le deuxième tube à serrer présente une portée tronconique qui vient en appui contre une portée du premier tube. Alternativement, les premier et deuxième tubes à serrer présentent, à leur extrémité, une portée tronconique. Ainsi, les portées des tubes sont enserrées dans le bicône intérieur de la ceinture 12, et le serrage du collier 10 rapproche les tubes l'un de l'autre.

En référence aux figues 2 et 3, on explique plus en détail la conformation de l'oreille 14.

L'oreille 14 comprend depuis sa zone de raccordement à la ceinture 12 et jusqu'à son extrémité libre, dans cet ordre :
- une portion de raccordement 26 à la ceinture 12 du collier, qui est redressée (i.e. relevées) par rapport à cette ceinture, vers l'extérieur de celle-ci, et qui est orientée plutôt radialement ;
- une paroi de liaison 28 qui prolonge la portion de raccordement 26 et qui est orientée plutôt circonférentiellement ;
- une paroi de serrage 30 qui prolonge la paroi de liaison 28 et qui est repliée vers la ceinture 12 de sorte qu'elle est orientée plutôt radialement, cette paroi de serrage 30 étant la portion d'extrémité libre de l'oreille 14.

Du fait que l'oreille 14 est relevées par rapport à la ceinture 12, la ceinture 12 et la portion de raccordement 26 définissent entre elles conformément à l'invention une zone de faible rayon de courbure formant pliure. Ainsi, lors du serrage du collier 10, la ceinture 12 (y compris les extrémités 12A de cette ceinture) entre au contact de l'objet à serrer, tandis que les oreilles 14, 16 (y compris leurs portions de raccordement 26) n'entrent pas au contact de l'objet à serrer mais entrent, éventuellement, au contact l'une de l'autre.

Le profil de l'oreille 14 a la forme générale d'un U dont la base est formée par ladite paroi de liaison 28 et dont les branches sont formées par la portion de raccordement 26 et la paroi de serrage 30. Ainsi, la portion de raccordement 26 et la paroi de liaison 28, de même que la paroi de liaison 28 et la paroi de serrage 30, définissent entre elles une zone de faible rayon de courbure, et un espace libre est ménagé entre la portion de raccordement 26 et la paroi de serrage 30.

La paroi de serrage 30 et la portion de raccordement 26 présentent respectivement des ouvertures 31 et 27 traversées par la tige de la vis 18.

L'ouverture 27 est oblongue pour permettre un ajustement de la position de la tige de la vis 18 lors de la mise en place du collier et lors du serrage.

La paroi de serrage 30 est la partie de l'oreille 14 avec laquelle le système de serrage, et plus précisément l'écrou 19, vient en prise. Le fait que la paroi de serrage 30 soit distincte et suffisamment distante de la portion de raccordement 26, permet à la vis 18 d'être proche de la fente 24 et orientée le plus tangentiellement possible par rapport à la circonférence de la ceinture 12 au niveau de la fente 24, tout en laissant l'écrou 19 accessible et facilement actionnable par un outil de serrage (car la distance radiale entre l'écrou 19 et ceinture 12 est suffisante pour le passage de cet outil). L'orientation tangentielle de la vis est une des conditions pour obtenir un bon serrage du collier sans exercer des efforts de serrage trop importants sur les oreilles 14, 16.

Conformément à l'invention, la ceinture 12 présente sur sa face extérieure au moins une (ici une) partie saillante située entre la portion de raccordement 26 et la paroi de serrage 30. Cette partie saillante fait saillie sur la face extérieure de la ceinture 12, vers l'extérieur de cette ceinture 12.

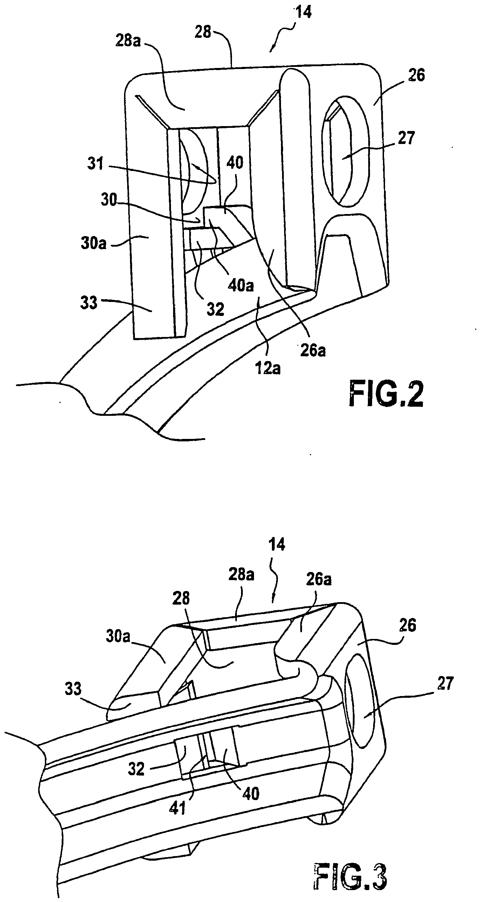

Dans l'exemple, cette partie saillante est formée par une languette 40 découpée dans la ceinture 12 et redressée vers l'extérieur de cette ceinture. La découpe réalisée pour obtenir cette languette 40 est bien visible sur la figure 3. Cette languette 40 se termine par une extrémité libre 40a orientée vers la paroi de serrage 30. La languette 40 définit sous elle un logement 41.

Par ailleurs, la paroi de serrage 30 porte un ergot 32. Cet ergot 32 est réalisé par pliage d'une portion du bord libre de la paroi de serrage 30, vers l'intérieur de l'oreille 14. L'ergot 32 est logé sous la languette 40, dans le logement 41.

Lors du serrage du collier, l'ergot 32 vient en butée contre la face intérieure de la languette 40. La coopération entre l'ergot 32 et la languette 40 permet de limiter le déplacement circonférentiel et le déplacement radial de la paroi de serrage 30.

Par ailleurs, la paroi de serrage 30 porte deux pattes latérales 33 s'étendant de part et d'autre de la ceinture 12 de sorte que la paroi de serrage 30 est à cheval sur la ceinture 12. Ceci permet de centrer la paroi de serrage 30 vis-à-vis de la ceinture 12.

Enfin, la portion de raccordement 26, la paroi de liaison 28 et la paroi de serrage 30 présentent chacune des rebords latéraux, notés respectivement 26a, 28a et 30a, repliés vers l'intérieur de l'oreille 14. Les rebords latéraux situés d'un même côté du collier sont tous dans un même plan de sorte que le rebord latéral 28a de la paroi de liaison forme entretoise entre les rebords latéraux 26a et 30a de la portion de raccordement et de la paroi de serrage. Pour ce faire, les zones des rebords 26a, 28a et 30a en contact sont biseautées. Grâce à cette configuration, on évite la déformation de la partie haute de l'oreille 14, et en particulier de la paroi de liaison 28, sous l'effet des efforts de serrage.

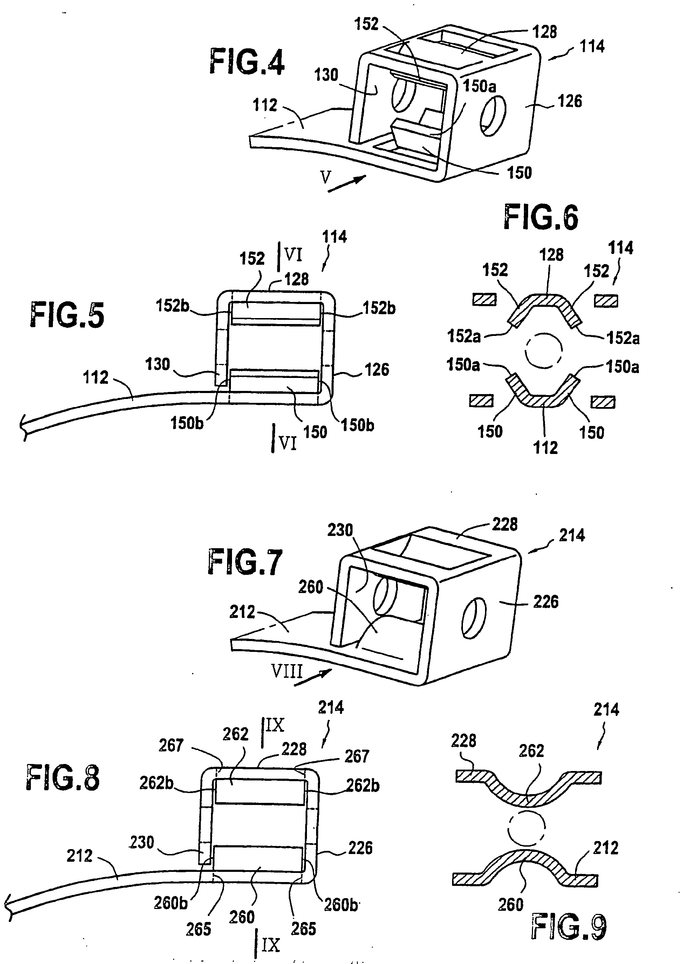

En référence aux figures 4, 5 et 6, d'une part, et aux figures 7, 8 et 9, d'autre part, on a représenté deux autres exemples de conformation d'oreille pour deux autres exemples de colliers. Les mêmes références numériques, augmentées de 100 et de 200, sont utilisées pour désigner des éléments analogues entre ces colliers et celui des figures 1 à 3.

Dans les deux cas les colliers ont une ceinture 112, 212 de profil plat, en section axiale. Ce type de collier peut être utilisé pour le raccordement de deux tubes à bouts lisses.

Dans les deux cas le profil de l'oreille 114, 214 a la forme générale d'un U dont la base est formée par une paroi de liaison 128, 228 et dont les branches sont formées par une portion de raccordement 126, 226 à la ceinture 112, 212, et une paroi de serrage 130, 230.

Dans l'exemple des figures 4, 5 et 6, la ceinture 112 présente sur sa face extérieure deux parties saillantes situées entre la portion de raccordement 126 et la paroi de serrage 130. Ces parties saillantes sont formées par des languettes 150 découpées dans la ceinture 112 et redressées vers l'extérieur de cette ceinture. Les languettes 150 ont chacune une extrémité libre 150a orientée vers une face latérale du collier. Chaque languette 150 s'étend depuis la portion de raccordement 126 jusqu'à la paroi de serrage 130 de manière à former une entretoise entre la paroi de serrage 130 et la portion de raccordement 126. Ainsi, lors du serrage du collier la paroi de serrage 130 et la portion de raccordement 126 viennent respectivement en butée contre les flancs opposés 150b des languettes 150, ce qui permet d'éviter l'écrasement de l'oreille 114.

De la même manière, la paroi de liaison 128 présente sur sa face intérieure deux parties saillantes formées par des languettes 152 découpées dans la ceinture 112 et redressées vers l'intérieur de l'oreille 114 (i.e. vers la ceinture 112). Ces languettes 152 ont chacune une extrémité libre 152a orientée vers une face latérale du collier. Chaque languette 152 s'étend depuis la portion de raccordement 126 jusqu'à la paroi de serrage 130 de manière à former une entretoise entre la paroi de serrage 130 et la portion de raccordement 126. Ainsi, lors du serrage du collier la paroi de serrage 130 et la portion de raccordement 126 viennent respectivement en butée contre les flancs opposés 152b des languettes 150, ce qui permet d'éviter l'écrasement de l'oreille 114.

Dans l'exemple des figures 7, 8 et 9, la ceinture 212 présente sur sa face extérieure une partie saillante située entre la portion de raccordement 226 et la paroi de serrage 230. Cette partie saillante est formée par un bossages 260 réalisé par déformation de la ceinture 212, vers l'extérieur.

Pour réaliser le bossage 260, on pratique des fentes axiales 265 dans la ceinture 212 à proximité de la portion de raccordement 226 et de la paroi de serrage 230 et on déforme vers l'extérieur la portion de ceinture 212 située entre ces fentes 265. Les flancs opposés 260b du bossage 260 ainsi obtenu sont fendus et présentent un bord franc.

Chaque bossage 260 s'étend depuis la portion de raccordement 226 jusqu'à la paroi de serrage 230 de manière à former une entretoise entre la paroi de serrage 230 et la portion de raccordement 226. Ainsi, lors du serrage du collier, la paroi de serrage 230 et la portion de raccordement 226 viennent respectivement en butée contre les flancs opposés 260b du bossage 260, ce qui permet d'éviter l'écrasement de l'oreille 114.

De la même manière, la paroi de liaison 228 présente sur sa face intérieure une partie saillante située entre la portion de raccordement 226 et la paroi de serrage 230. Cette partie saillante est formée par un bossages 262 réalisé par déformation de la paroi de liaison 228, vers l'intérieur de l'oreille (i.e. vers la ceinture 212).

Pour réaliser le bossage 260, on pratique des fentes axiales 267 dans la paroi de liaison 228 à proximité de la portion de raccordement 226 et de la paroi de serrage 230 et on déforme vers l'extérieur la portion de paroi de liaison 228 située entre ces fentes 267. Les flancs opposés 262b du bossage 260 ainsi obtenu sont fendus et présentent un bord franc.

Chaque bossage 262 s'étend depuis la portion de raccordement 226 jusqu'à la paroi de serrage 230 de manière à former une entretoise entre la paroi de serrage 230 et la portion de raccordement 226. Ainsi, lors du serrage du collier, la paroi de serrage 230 et la portion de raccordement 226 viennent respectivement en butée contre les flancs opposés 262b du bossage 262, ce qui permet d'éviter l'écrasement de l'oreille 214.

## Revendications

1. Dispositif de serrage comprenant :
- un collier (10) comprenant une ceinture (12) susceptible d'être disposée autour d'objet(s) à serrer et au moins deux oreilles (14, 16) redressées par rapport à cette ceinture, vers l'extérieur de celle-ci, et
- un système de serrage apte à coopérer avec les deux oreilles pour rapprocher celles-ci l'une de l'autre de manière à provoquer le serrage du collier,
dans lequel au moins une des deux oreilles présente :
- une portion de raccordement (26) à la ceinture (12), cette portion de raccordement (26) étant redressée par rapport à cette ceinture (12), vers l'extérieur de celle-ci, la portion de raccordement (26) et la ceinture (12) définissant entre elles une zone de faible rayon de courbure, formant pliure, et
- une paroi de serrage (30) repliée vers la ceinture, le système de serrage venant en prise avec cette paroi de serrage lors du serrage du collier,
le dispositif étant **caractérisé en ce que** la ceinture (12) présente sur sa face extérieure au moins une partie saillante située entre la portion de raccordement et la paroi de serrage, la paroi de serrage venant en butée contre cette partie saillante lors du serrage du collier.

2. Dispositif selon la revendication 1, dans lequel ladite partie saillante est formée par une languette (40, 150) découpée dans la ceinture et redressée vers l'extérieur de cette ceinture.

3. Dispositif selon la revendication 2, dans lequel ladite languette (40) a une extrémité libre orientée vers la paroi de serrage.

4. Dispositif selon la revendication 2, dans lequel ladite languette (150) a une extrémité libre orientée vers une face latérale du collier.

5. Dispositif selon la revendication 1, dans lequel ladite partie saillante est formée par un bossage (260) réalisé par déformation de la ceinture.

6. Dispositif selon la revendication 5, dans lequel ledit bossage est fendu de manière à présenter au moins un bord franc contre lequel la paroi de serrage vient en butée lors du serrage du collier.

7. Dispositif selon l'une quelconque des revendications 1 à 6, dans lequel ladite partie saillante forme une entretoise entre la paroi de serrage et la portion de raccordement.

8. Dispositif selon l'une quelconque des revendications 1 à 7, dans lequel la paroi de serrage (30) porte un ergot (32) et dans lequel ladite partie saillante définit sous elle un logement (41) destiné à recevoir ledit ergot.

9. Dispositif selon l'une quelconque des revendications 1 à 8, dans lequel la paroi de serrage (30) porte deux pattes latérales (33) s'étendant de part et d'autre de la ceinture (12) de manière à centrer la paroi de serrage vis-à-vis de la ceinture.

10. Dispositif selon l'une quelconque des revendications 1 à 9, dans lequel l'oreille présentant la portion de raccordement (26) et la paroi de serrage (30) présente, en outre, une paroi de liaison (28) entre la portion de raccordement et la paroi de serrage, le profil de l'oreille ayant la forme générale d'un U dont la base est formée par ladite paroi de liaison (28).

11. Dispositif selon la revendication 10, dans lequel ladite paroi de liaison (28) présente sur sa face intérieure au moins une autre partie saillante qui forme entretoise entre la portion de raccordement (26) et la paroi de serrage (30).

12. Dispositif selon la revendication 10, dans lequel la portion de raccordement (26), la paroi de liaison (28) et la paroi de serrage (30) présentent chacune des rebords latéraux (26a, 28a, 30a) repliés vers l'intérieur de ladite oreille (14), les rebords latéraux (28a) de la paroi de liaison formant entretoise entre les rebords latéraux (26a, 30a) de la portion de raccordement et de la paroi de serrage.

13. Dispositif selon l'une quelconque des revendications 1 à 12, dans lequel ledit système de serrage est un ensemble vis (18)/écrou (19), la paroi de serrage (30) et la portion de raccordement (26) présentant des ouvertures (27, 31) traversées par la tige de la vis, et la tête de la vis ou l'écrou venant en appui sur la paroi de serrage.

## Claims

1. A clamping device comprising:
• a collar (10) comprising a belt (12) suitable for being disposed around one or more articles to be clamped, and at least two lugs (14, 16) that are upstanding relative to said belt towards the outside thereof; and
• a tightening system suitable for co-operating with the two lugs so as to move them closer together in such a manner as to cause the collar to be tightened;
in which device at least one of the two lugs has:
- a connection portion (26) via which it is connected to the belt (12), which connection portion (26) is upstanding relative to said belt (12), towards the outside thereof, the connection portion (26) and the belt (12) defining between them a zone that has a small radius of curvature, forming a fold, and
- a tightening wall (30) folded back towards the belt, the tightening system coming into engagement with said tightening wall during tightening of the collar;
said clamping device being **characterized in that**, on its outside face, the belt (12) has at least one projecting portion situated between the connection portion and the tightening wall, the tightening wall coming into abutment against said projecting portion while the collar is being tightened.

2. A device according to claim 1, wherein said projecting portion is formed by a tongue (40, 150) cut out from the belt and upstanding towards the outside of said belt.

3. A device according to claim 2, wherein said tongue (40) has a free end pointing towards the tightening wall.

4. A device according to claim 2, wherein said tongue (150) has a free end pointing towards a side face of the collar.

5. A device according to claim 1, wherein said projecting portion is formed by a projection (260) formed by deforming the belt.

6. A device according to claim 5, wherein said projection is slit so as to have at least one clean-cut edge against which the tightening wall comes into abutment while the collar is being tightened.

7. A device according to any one of claims 1 to 6, wherein said projecting portion forms a spacer between the tightening wall and the connection portion.

8. A device according to any one of claims 1 to 7, wherein the tightening wall (30) carries a tab (32) and wherein said projecting portion defines a recess (41) under it that is designed to receive said tab.

9. A device according to any one of claims 1 to 8, wherein the tightening wall (30) carries two side legs (33) extending on either side of the belt (12) in such a manner as to center the tightening wall relative to the belt.

10. A device according to any one of claims 1 to 9, wherein the lug having the connection portion (26) and the tightening wall (30) also has a link wall (28) between the connection portion and the tightening wall, the profile of the lug being generally U-shaped, with the base of the U-shape being formed by said link wall (28).

11. A device according to claim 10, wherein, on its inside face, said link wall (28) has at least one other projecting portion that forms a spacer between the connection portion (26) and the tightening wall (30).

12. A device according to claim 10, wherein the connection portion (26), the link wall (28) and the tightening wall (30) are provided with respective side flanges (26a, 28a, 30a) folded over towards the inside of said lug (14), the side flanges (28a) of the link wall forming spacers between the side flanges (26a, 30a) of the connection portion and of the tightening wall.

13. A device according to any one of claims 1 to 12, wherein said tightening system is a nut (19) and bolt (18) fastener, the tightening wall (30) and the connection portion (26) being provided with openings (27, 31) for passing the shank of the bolt, and the head of the bolt or the nut coming to bear against the tightening wall.

## Patentansprüche

1. Klemmvorrichtung, umfassend:
- eine Schelle (10), die einen Ring (12), welcher geeignet ist, um einen festzuklemmenden Gegenstand/festzuklemmende Gegenstände herum angeordnet zu werden, sowie wenigstens zwei gegenüber diesem Ring zu dessen Außenseite hin aufgerichtete Ösen (14, 16) umfaßt, und
- ein Klemmsystem, das geeignet ist, mit den beiden Ösen zusammenzuwirken, um diese einander zu nähern, um das Festziehen der Schelle zu bewirken,
wobei wenigstens eine der beiden Ösen aufweist:
- einen Abschnitt zur Verbindung (26) mit dem Ring (12), wobei dieser Verbindungsabschnitt (26) gegenüber diesem Ring (12) zu dessen Außenseite hin aufgerichtet ist, wobei der Verbindungsabschnitt (26) und der Ring (12) zwischen sich einen eine Abkantung bildenden Bereich mit kleinem Krümmungsradius definieren, und
- eine in Richtung des Rings umgebogene Klemmwand (30), wobei das Klemmsystem bei Festziehen der Schelle mit dieser Klemmwand in Eingriff gelangt,
wobei die Vorrichtung **dadurch gekennzeichnet ist, daß** der Ring (12) an seiner Außenseite wenigstens einen zwischen dem Verbindungsabschnitt und der Klemmwand gelegenen vorspringenden Teil aufweist, wobei die Klemmwand bei Festziehen der Schelle an diesem vorspringenden Teil in Anschlag gelangt.

2. Vorrichtung nach Anspruch 1, wobei der vorspringende Teil von einer aus dem Ring ausgeschnittenen und zur Außenseite dieses Rings hin aufgerichteten Zunge (40, 150) gebildet ist.

3. Vorrichtung nach Anspruch 2, wobei die Zunge (40) ein in Richtung der Klemmwand gerichtetes freies Ende aufweist.

4. Vorrichtung nach Anspruch 2, wobei die Zunge (150) ein in Richtung einer Seitenfläche der Schelle gerichtetes freies Ende aufweist.

5. Vorrichtung nach Anspruch 1, wobei der vorspringende Teil von einem durch Verformen des Rings hergestellten Buckel (260) gebildet ist.

6. Vorrichtung nach Anspruch 5, wobei der Buckel geschlitzt ist, so daß er wenigstens einen freien Rand aufweist, an dem die Klemmwand bei Festziehen der Schelle in Anschlag gelangt.

7. Vorrichtung nach einem der Ansprüche 1 bis 6, wobei der vorspringende Teil einen Steg zwischen der Klemmwand und dem Verbindungsabschnitt bildet.

8. Vorrichtung nach einem der Ansprüche 1 bis 7, wobei die Klemmwand (30) einen Stift (32) trägt und wobei der vorspringende Teil unter sich eine zum Aufnehmen des Stiftes bestimmte Aufnahme (41) definiert.

9. Vorrichtung nach einem der Ansprüche 1 bis 8, wobei die Klemmwand (30) zwei Seitenlaschen (33) trägt, die sich auf beiden Seiten des Rings (12) erstrecken, um die Klemmwand gegenüber dem Ring zu zentrieren.

10. Vorrichtung nach einem der Ansprüche 1 bis 9, wobei die Öse, die den Verbindungsabschnitt (26) und die Klemmwand (30) aufweist, ferner eine Verbindungswand (28) zwischen dem Verbindungsabschnitt und der Klemmwand aufweist, wobei das Profil der Öse die allgemeine Form eines U aufweist, dessen Basis von der Verbindungswand (28) gebildet ist.

11. Vorrichtung nach Anspruch 10, wobei die Verbindungswand (28) an ihrer Innenseite wenigstens einen weiteren vorspringenden Teil aufweist, der einen Steg zwischen dem Verbindungsabschnitt (26) und der Klemmwand (30) bildet.

12. Vorrichtung nach Anspruch 10, wobei der Verbindungsabschnitt (26), die Verbindungswand (28) und die Klemmwand (30) jeweils Seitenränder (26a, 28a, 30a) aufweisen, die zur Innenseite der Öse (14) umgebogen sind, wobei die Seitenränder (28a) der Verbindungswand einen Steg zwischen den Seitenrändern (26a, 30a) des Verbindungsabschnitts und der Klemmwand bilden.

13. Vorrichtung nach einem der Ansprüche 1 bis 12, wobei das Klemmsystem eine Anordnung aus Schraube (18) / Mutter (19) ist, wobei die Klemmwand (30) und der Verbindungsabschnitt (26) Öffnungen (27, 31) aufweisen, die von dem Schaft der Schraube durchgriffen werden, und wobei der Kopf der Schraube oder die Mutter an der Klemmwand in Anlage gelangt.
